Europäisches Patentamt

European Patent Office

Office européen des brevets

(19)

(11) Publication number: **0 072 245**
**B1**

(12) **EUROPEAN PATENT SPECIFICATION**

(45) Date of publication of patent specification: **25.06.86**

(51) Int. Cl.⁴: **C 09 K 7/06**

(21) Application number: **82304208.0**

(22) Date of filing: **10.08.82**

(54) **High temperature drilling fluids based on sulphonated thermoplastic polymers.**

(30) Priority: **12.08.81 US 292333**

(43) Date of publication of application:
**16.02.83 Bulletin 83/07**

(45) Publication of the grant of the patent:
**25.06.86 Bulletin 86/26**

(84) Designated Contracting States:
**CH DE FR GB LI NL SE**

(56) References cited:
**WO-A-81/01007**
**US-A-3 065 172**
**US-A-3 140 747**
**US-A-3 826 771**
**US-A-4 012 329**

(73) Proprietor: **Exxon Research and Engineering Company**
**P.O.Box 390 180 Park Avenue**
**Florham Park New Jersey 07932 (US)**

(72) Inventor: **Lundberg, Robert Dean**
**4 Brian Drive**
**Bridgewater New Jersey (US)**
Inventor: **Peiffer, Dennis George**
**10 Churchill Road**
**East Brunswick New Jersey (US)**
Inventor: **Walker, Thad Oscar**
**1311 St. Andrew's**
**Humble Texas (US)**

(74) Representative: **Field, Roger Norton et al**
**ESSO Engineering (Europe) Ltd. Patents & Licences Apex Tower High Street**
**New Malden Surrey KT3 4DJ (GB)**

Courier Press, Leamington Spa, England.

## Description

The present invention concerns oil-based drilling muds which are used during operation of gas and oil wells, e.g., to maintain pressure, cool drill bits and lift cuttings from the holes.

U.S. 3826771 discloses certain water-in-oil emulsions having a water-soluble vinyl addition polymer concentration of between 20% and 50% by weight based on the emulsion which are stable and which can be used for drilling muds. However, the patentees of U.S. 3826771 were not able to make water-in-oil emulsions when using sodium polystyrene sulphonate.

The oil-base drilling muds of the present invention minimally comprise (but can also include other additives) an organic liquid such as an oil; fresh water or salt water; an emulsifier; a wetting agent; a weighting material and a sulphonated polymer, the latter acting as a viscosification agent. In general, the oil-based drilling mud has a specific gravity of 7 lb/gallon to 20 lb/gallon (0.7 to 2 kg/l) more preferably, 10 to 16 (1 to 1.6 kg/l) and most preferably 12 to 16 lb/gallon) (1.2 to 1.6 kg/l). A typical oil-based drilling mud as envisaged by the present invention comprises: an oil; 1 to 10 parts by weight of water per 100 parts by weight of the oil, more preferably 3 to 5; and 20 to 50 lb/bbl (0.057 to 0.143 kg/l) of an emulsifier; 1/2 to 5 lb/bbl (0.0014 to 0.014 kg/l) of a wetting agent; and weighting material (Barium sulphate or Barite) necessary to give the desired mud density; which comprises less than 800 lb/bbl (2.28 kg/l) of Barium sulphate, more preferably 5 to 750 (0.014 to 2.14 kg/l) and most preferably 10 to 700 lb/bbl (0.028 to 2.0 kg/l) and .25 to 4 lb/bbl (0.0007 to 0.011 kg/l) of sulphonated polymer.

The oil employed in the oil-based drilling mud is generally a No. 2 diesel fuel, but it can be other commercially available hydrocarbon solvents such as kerosene, fuel oils or selected crude. If crudes are used, they should be weathered and must be free of emulsion breakers.

Typical, but non-limiting examples of suitable emulsifiers which can be readily employed are magnesium or calcium soaps of fatty acids.

Typical, but non-limiting examples of a suitable wetting agent which can be readily employed is an alkylaryl sulphonate.

Typical, but non-limiting examples of a weighting material which can be readily employed is barite or a barium sulphate which may optionally be surface treated with other cations, such as calcium.

The neutralized sulfonated thermoplastic polymers employed in the oil base drilling muds are preferably derived from polystyrene type thermoplastics polymers selected from polystyrene, poly-t-butyl-styrene, polychlorostyrene, polyalpha methyl styrene, co- or terpolymers of the aforementioned with acrylonitrile or vinyl toluene, polystyrene, poly-t-butylstyrene, polychlorostyrene, polyvinyl toluene, polyalpha methyl styrene and or terpolymers of the aforementioned with acrylonitrile methyl methacrylate butadiene.

Although sulfonated thermoplastics are the preferred form of this invention, there are a large number of sulfonate-containing polymers which fall within the scope of this invention. These are described in U.S. Patents 3,870,841 and 3,931,021. Such polymers can be prepared by direct sulfonation of the preformed polymer or by copolymerization with a sulfonate-containing monomer. Particularly desirable polymers are those derived from vinyl monomer or comonomer, except propylene.

The polystyrene thermoplastics suitable for use in the practice of the invention have a glass transition temperature from 70°C to 150°C, more preferably 90°C to 140°C and most preferably 90°C to 120°C. These polystyrene resins have a weight average molecular weight, as measured by GPC, of 5,000 to 500,000, more preferably 20,000 to 350,000 and most preferably 90,000 to 300,000. These base polystyrene thermoplastic resins can be prepared directly by any of the known polymerization processes. The term "thermoplastic" is used in its conventional sense to mean a substantially rigid (flexus modulus >10,000 psi (6.895 × 10⁷ N/m²) material capable of retaining the ability to flow at elevated temperatures for relatively long times.

The preferred polystyrene thermoplastic resin is a homopolymer of styrene having a number average molecular weight of 180,000, and an intrinsic viscosity in toluene of 0.8. These polymers are widely available commercially in large volume. A suitable material is Styron 666 manufactured by Dow Chemical Co., which affords a suitable number average molecular weight of 105,000.

The thermoplastic polymers are sulfonated by a process in a non-reactive solvent such as a chlorinated aliphatic solvent, chlorinated aromatic hydrocarbon, or an aliphatic hydrocarbon such as carbon tetrachloride, dichloroethane or chlorobenzene. The preferred solvents are the lower boiling chlorinated hydrocarbons. A sulfonating agent is added to the solution of the polymer and a non-reactive solvent at a temperature of −100°C to 100°C for a period of time of 1 to 60 minutes, most preferably at room temperature for 5 to 45 minutes; and most preferably 15 to 30. Typical sulfonating agents are described in U.S. Patents 3,642,728 and 3,836,511. These sulfonating agents are selected from an acyl sulfate, a mixture of sulfuric acid and an acid anhydride or a complex of sulfur trioxide donor and a Lewis base containing oxygen, sulfur or phosphorus. Typical sulfur trioxide donors are SO₃, chlorosulfonic acid, fluorosulfonic acid, sulfuric acid, oleum, etc. Typical Lewis bases are: dioxane, tetrahydrofuran, tetrahydrothiopene or triethyl phosphate. The most preferred sulfonation agent for this invention is an acyl sulfate selected from benzoyl, acetyl, propionyl and butyryl sulfate. The acyl sulfate can be formed in situ in the reaction medium or pregenerated before its addition to the reaction medium in a chlorinated aliphatic or aromatic hydrocarbon.

It should be pointed out that neither the sulfonating agent nor the manner of sulfonation is critical, provided that the sulfonating method does not degrade the polymer backbone. The reaction is quenched with an aliphatic alcohol such as methanol, ethanol or isopropanol, with an aromatic hydroxyl compound, such as phenol, a cycloaliphatic alcohol such as cyclohexanol or with water. The unneutralized sulfonated thermoplastic polymer has 5 to 100, more preferably 8 to 60; and most preferably 10 to 45 meq. sulfonate groups per 100 grams of sulfonated polymer.

The range of sulfonate content which can be considered does vary over an extremely broad latitude; however it has been observed that in those systems of high sulfonation level that there is great difficulty in dissolving the sulfonated polymers and there can be very adverse effects in terms of the interaction of the sulfonated polymer with the barite weighting agent and with the other components of the drilling mud. Therefore, there is clearly an optimum level of sulfonation content which may vary from one sulfonated backbone to another but for sulfonated polystyrene it is in the most preferred embodiment of the invention as described above. The meq. of sulfonate groups/100 grams of sulfonated thermoplastic polymer is determined by both titration of the polymeric sulfonate acid and Dietert Sulfur analysis. In the titration of the unneutralized sulfonate, the polymer is dissolved in solvent consisting of 95 parts by volume of toluene and 5 parts by volume of methanol at a concentration level of 50 grams per liter of solvent. The unneutralized sulfonate is titrated with ethanolic sodium hydroxide to an Alizarin-Thymolphthalein endpoint.

The unneutralized sulfonated thermoplastic polymer is gel free and hydrolytically stable. Gel is measured by stirring a given weight of polymer in a solvent comprising 95 vol. toluene-5 vol. methanol at a concentration of 5 wt. %, for 24 hours, allowing the mixture to settle, withdrawing a weighed sample of the supernatant solution and evaporating to dryness.

Hydrolytically stable means that the unneutralized sulfonate will not be eliminated under neutral or slightly basic conditions to a neutral moiety which is incapable of being converted to highly ionic functionality.

The unneutralized sulfonate groups of the sulfonated thermoplastic polymer are neutralised by the addition of a solution of a basic salt to the unneutralized sulfonated polymer dissolved in the mixture of the aliphatic alcohol and non-reactive solvent. The basic salt is dissolved in a binary solvent system consisting of water and/or an aliphatic alcohol. The counterion of the basic salt may be selected from antimony, iron, aluminum, lead and Groups IA, IIA, IB and IIB of the Periodic Table of Elements and mixtures thereof as well as ammonium and amine counterions. The preferred cations include zinc, magnesium, sodium, lead, barium, calcium, and ammonium cations, wherein zinc, magnesium and sodium are the most preferred cations. The anion of the basic salt is selected from a carboxylic acid having from 1 to 4 carbon atoms per molecule, a hydroxide, or alkoxide and mixtures thereof. The preferred neutralizing agent is a metal acetate, more preferably sodium.acetate. Sufficient metal salt of the carboxylic acid is added to the solution of the unneutralized sulfonated thermoplastic polymer to effect neutralization. It is preferable to neutralize at least 95% of the sulfonate groups, more preferably 98%, most preferably 100%.

Examples of metal oxides useful in preparing metal sulfonates are $MgO$, $CaO$, $BaO$, $ZnO$, $Ag_2O$, $PbO_2$ and $Pb_3O_4$. Useful examples of metal hydroxides are $NaOH$, $KOH$, $LiOH$, $Mg(OH)_2$ and $Ba(OH)_2$.

In addition to the sulfonation/neutralization of polystyrene, an alternative approach to such polymers involves the copolymerization of sulfonate-containing monomers with styrene to yield polymers having the appropriate levels of sulfonate groups. The sulfonate-containing polymers obtained via this approach are also effective in this invention.

Alternatively, a latex of a sulfonated polymer as described in U.S. Patents 3,912,683 and 4,007,149, could be readily employed as a convenient method of introducing the sulfonated polymer into the oil-based drilling mud. A polar cosolvent can optionally be added to the oil drilling mud, wherein the polar cosolvent increases the solubility of the sulphonated polymer in the oil drilling mud by decreasing the strong ionic interactions between the sulphonate groups of the sulphonated polymer.

Example I

Oil-based drilling muds were prepared using conventional laboratory methods. The muds contain No. 2 diesel oil, fresh or salt water, emulsifier, supplementary emulsifier, a wetting agent, weighting agent and a 1.7 mole percent sodium salt of sulfonated polystyrene. The muds were aged overnight at 150°F (65.6°C) to ensure chemical equilibrium. Aliquots of the mud were aged in pressurized cells at 300°F (148.9°C) and 400°F (204.4°C) for 16 hours. The cells were cooled at room temperature, depressurized, and then the rheological properties of the mud were measured on a Fann Model 35 viscometer at 115°F (46.1°C). Muds containing 0.5 and 1.0 lbs/bbl (0.0014 and 0.0028 kg/l) of sulfonated polystyrene is presented in Table I.

TABLE I

Rheological Properties of Several Oil-Based Muds Containing 1.7 Mole Percent Sulfonated Polystyrene

| Designation | lbs/bbl[A] | Water | 600[B] | 300[C] | PV[D] | YP[E] | Gels[F] | Temp. °F. (°C) |
|---|---|---|---|---|---|---|---|---|
| 1M | 0.5 (0.0014 kg/l) | Fresh | 63 | 35 | 28 | 7 | 2—10 | 150 (66) |
| | | | 58 | 32 | 26 | 6 | 1—11 | 300 (149) |
| | | | 69 | 40 | 29 | 11 | 5—27 | 400 (204) |
| 2M | 1.0 (0.0028 kg/l) | Fresh | 62 | 36 | 26 | 10 | 3—12 | 150 (66) |
| | | | 62 | 35 | 27 | 8 | 2—18 | 300 (149) |
| | | | 88 | 54 | 34 | 20 | 10—26 | 400 (204) |
| 3M | 0.5 (0.0014 kg/l) | Salt | 41 | 23 | 18 | 5 | 2—3 | 150 (66) |
| | | | 41 | 22 | 19 | 3 | 1—2 | 300 (149) |
| | | | 44 | 23 | 21 | 2 | 1—4 | 400 (204) |
| 4M | 1.0 (0.0028 kg/l) | Salt | 44 | 24 | 20 | 4 | 1—3 | 150 (66) |
| | | | 49 | 27 | 22 | 5 | 2—4 | 300 (149) |
| | | | 55 | 30 | 25 | 5 | 1—3 | 400 (204) |

[A] Polymer concentration in lbs/bbl.

[B] Reading taken on a Fann® rotational viscometer at 600 rpm.

[C] Reading taken on a Fann® rotational viscometer at 300 rpm.

[D] Plastic viscosity in centipoise units: Difference between the 600 rpm and 300 rmp measurements.

[E] Yield point in units of lbs/100 ft.$^2$ (N/m$^2$ × 0.021): Difference between the 300 rpm measurement and plastic viscosity.

[F] First number is the initial value (expressed as lbs/100 ft.$^2$) (N/m$^2$ × 0.021) on the viscometer at 3 rpm, while the second number corresponds to the value after 10 minutes has elapsed.

Table I shows the effectiveness of 1.7 mole percent sodium salt of sulfonated polystyrene as a viscosifier and gel strength additive for oil-based muds. The data show that mud containing fresh water can be treated with the sulfonated polymer to enhance both the viscosity and gel strength characteristics. These desirable properties are maintained after subjecting the mud to high temperatures (300°—400°F) (149—204°C). In addition, the data show that the sulfonated polystyrene is not effective as a viscosifier and gel strength additive for oil muds containing calcium chloride water.

Example II

Oil-based drilling muds, formulated with the additives employed in Example I (except the 1.7 mole percent sulfonated polystyrene) and containing 2.65 and 4.19 mole percent sodium salt of sulfonated polystyrene, were prepared using conventional laboratory methods. These results are shown in Table II.

5

TABLE II

Rheological Properties of Several Oil-Based Drilling Muds Containing 2.65 or 4.19 Mole Percent Sulfonated Polystyrene

| Designation | Sulfonation Level (mole %) | lb/bbl | $H_2O$ | 600[A] | 300[A] | PV[A] | YP[A] | Gels[A] | Temp, °F (°C) |
|---|---|---|---|---|---|---|---|---|---|
| 1 | 2.65 | 0.5 (0.0014 kg/l) | Fresh | 61 | 37 | 24 | 13 | 5—13 | 150 (66) |
|   |   |   |   | 47 | 25 | 22 | 3 | 2—13 | 300 (149) |
|   |   |   |   | 58 | 38 | 20 | 8 | 3—17 | 400 (204) |
| 2 | 2.65 | 1.0 (0.0028 kg/l) | Fresh | 59 | 34 | 25 | 9 | 3—10 | 150 (66) |
|   |   |   |   | 50 | 28 | 22 | 6 | 3—17 | 300 (149) |
|   |   |   |   | 60 | 34 | 26 | 8 | 6—21 | 400 (204) |
| 3 | 4.19 | 0.5 (0.0014 kg/l) | Fresh | 54 | 32 | 22 | 10 | 4—10 | 150 (66) |
|   |   |   |   | 44 | 22 | 22 | 0 | 1—1 | 300 (149) |
|   |   |   |   | 50 | 25 | 25 | 0 | 1—9 | 400 (204) |
| 4 | 4.19 | 1.0 (0.0028 kg/l) | Fresh | 57 | 33 | 24 | 9 | 4—11 | 150 (66) |
|   |   |   |   | 47 | 24 | 23 | 1 | 1—6 | 300 (149) |
|   |   |   |   | 57 | 30 | 27 | 3 | 2—14 | 400 (204) |
| 5 | 2.65 | 0.5 (0.0014 kg/l) | Salt | 43 | 25 | 18 | 7 | 3—6 | 150 (66) |
|   |   |   |   | 46 | 24 | 22 | 2 | 1—4 | 300 (149) |
|   |   |   |   | 53 | 28 | 25 | 3 | 2—8 | 400 (204) |
| 6 | 2.65 | 1.0 (0.0028 kg/l) | Salt | 37 | 20 | 17 | 3 | 1—3 | 150 (66) |
|   |   |   |   | 42 | 21 | 21 | 0 | 1—2 | 300 (149) |
|   |   |   |   | 53 | 26 | 27 | 0 | 1—5 | 400 (204) |
| 7 | 4.19 | 0.5 (0.0014 kg/l) | Salt | 37 | 20 | 17 | 3 | 2—4 | 150 (66) |
|   |   |   |   | 40 | 20 | 20 | 0 | 1—2 | 300 (149) |
|   |   |   |   | 46 | 24 | 22 | 2 | 1—8 | 400 (204) |
| 8 | 4.19 | 1.0 (0.0028 kg/l) | Salt | 39 | 21 | 18 | 3 | 1—3 | 150 (66) |
|   |   |   |   | 40 | 20 | 20 | 0 | 1—2 | 300 (149) |
|   |   |   |   | 42 | 21 | 21 | 0 | 1—2 | 400 (204) |

[A] The meaning of the symbol is given in Table I.

Table II shows the effectiveness of two different sulfonate levels of polystyrene as a viscosifier for oil-based muds containing either fresh or calcium chloride water. The data indicates that the 2.65 mole percent sulfonate level functions well as a viscosifier and gel strength additive for muds containing fresh water. Also, the data indicates that the 4.19 mole percent sulfonated polystyrene does not perform as well as the 2.65 mole percent sulfonated polystyrene material in fresh water. The reduced performance of the former material is due essentially to its very low solubility in the mud formulation. When calcium chloride water is present, the rheological properties of the muds containing either polymer is found to have deteriorated.

Example III

An oil-based drilling mud was produced (as described in Example I) with a 2.65 mole percent sodium sulfonated polystyrene and a nonionic surfactant (Pluronic® F—68 is manufactured by the BASF Wyandotte Corporation). The rheological properties of this mud in both fresh and calcium chloride water is presented in Table III.

TABLE III

Rheological Properties of an Oil-Based Mud Containing 2.65 Mole Percent and a Nonionic Surfactant

| Designation | lbs/bbl | H$_2$O | 600[A] | 300[A] | PV[A] | YP[A] | Gels[A] | Temp. °F (°C) |
|---|---|---|---|---|---|---|---|---|
| 1 | 0.5—SPS | Fresh | 65 | 42 | 23 | 19 | 7—16 | 150 (66) |
| | 0.5—F88 | | 49 | 27 | 22 | 5 | 1—10 | 300 (149) |
| | (0.0014 kg/l) | | 52 | 30 | 22 | 8 | 4—20 | 400 (204) |
| 3 | 0.5—SPS | Fresh | 47 | 27 | 20 | 7 | 3—7 | 150 (66) |
| | 1.0—F88 | | 47 | 26 | 21 | 5 | 2—10 | 300 (149) |
| | (0.0014 and 0.0028 kg/l) | | 61 | 35 | 26 | 9 | 5—16 | 400 (204) |
| 2 | 0.5—SPS | Salt | 47 | 28 | 19 | 9 | 3—7 | 150 (66) |
| | 0.5—F88 | | 54 | 29 | 25 | 4 | 1—5 | 300 (149) |
| | (0.0014 kg/l) | | 59 | 33 | 26 | 7 | 3—10 | 400 (204) |
| 4 | 0.5—SPS | Salt | 42 | 26 | 16 | 10 | 3—6 | 150 (66) |
| | 1.0—F88 | | 48 | 27 | 21 | 6 | 1—5 | 300 (149) |
| | (0.0014 and 0.0028 kg/l) | | 55 | 30 | 25 | 5 | 3—13 | 400 (204) |

[A] The explanation of these symbols is given in Table I.

**0 072 245**

The data in Table III show that the 2.65 mole percent sulfonated polystyrene along with the nonionic surfactant produced an oil-drilling mud possessing excellent rheological properties. Both the viscosity and gel strength characteristics of the oil mud is enhanced in either fresh or calcium chloride water. In addition, the sulfonated polystyrene and nonionic surfactant is capable of maintaining these characteristics after being subjected to high temperatures (300°—400°F) (149—204°C).

## Claims

1. An oil-based drilling mud which comprises:
(a) an organic liquid;
(b) 1 to 10 parts by weight of water per 100 parts by weight of the organic liquid;
(c) 20 to 50 lb/bbl (0,057 to 0,143 kg/l) of an emulsifier;
(d) a wetting agent;
(e) a weighting material in sufficient quantity to achieve a density of 7 to 20 lb/gallon (.7 to 2 kg/l); and
(f) 0.25 to 4.0 lb/bbl (0.0007 to 0.011 kg/l) of a neutralized sulphonated thermoplastic polymer, said neutralized sulphonated thermoplastic polymer having 5 to 100 meq. of sulphonate groups per 100 grams of the neutralized sulphonated thermoplastic polymer.

2. A drilling mud according to claim 1, in which the sulphonate groups of said neutralized sulphonated thermoplastic polymer are neutralized with a counterion selected from antimony, iron, aluminum, lead and metals of Groups IA, IIA, IB and IIB of the Periodic Table of Elements.

3. A drilling mud according either of claims 1 and 2, in which said neutralized sulphonated thermoplastic polymer is derived from polystyrene.

4. A drilling mud according to either of claims 1 and 2, in which said neutralized sulphonated thermoplastic polymer is derived from poly-t-butyl-styrene, polychlorostyrene, polyalpha methyl styrene, polyvinyl toluene, co- or terpolymers of styrene with acrylonitrile, methyl methacrylate, butadiene or mixtures thereof.

5. A drilling mud according to any of the preceding claims in which said wetting agent is an alkylaryl sulphonate.

6. A drilling mud according to any one of the preceding claims in which said weighting material is Barite or barium sulfate.

7. A drilling mud according to any one of the preceding claims in which the concentration level of said weighting material is sufficient to give said drilling mud a specific gravity of 10 to 16 pounds per gallon (1 to 1.6 kg/l).

8. A drilling mud according to any one of the preceding claims in which said organic liquid is an oil.

9. A drilling mud according to any one of the preceding claims which includes a polar cosolvent.

10. A drilling mud according to any one of the preceding claims in which said water is salt water.

## Patentansprüche

1. Bohrschlamm auf Ölbasis, gekennzeichnet durch
(a) eine organische Flüssigkeit;
(b) 1 bis 10 Gewichtsteile Wasser je 100 Gewichtsteile der organischen Flüssigkeit;
(c) 0,057 bis 0,143 kg/l (20 bis 50 lb/bbl) Emulgiermittel;
(d) ein Benetzungsmittel;
(e) ein Beschwerungsmaterial in ausreichender Menge, um eine Dichte von 0,7 bis 2 kg/l (7 bis 20 lb/gallon) zu erreichen; und
(f) 0,0007 bis 0,011 kg/l (0,25 bis 4,0 lb/bbl) eines neutralisierten sulfonierten thermoplastischen Polymeren, wobei das neutralisierte sulfonierte thermoplastische Polymer 5 bis 100 Milliäquivalente Sulfonatgruppen je 100 Gramm des neutralisierten sulfonierten thermoplastischen Polymeren aufweist.

2. Bohrschlamm nach Anspruch 1, dadurch gekennzeichnet, daß die Sulfonatgruppen des neutralisierten sulfonierten thermoplastischen Polymeren mit einem Gegenion ausgewählt aus Antimon, Eisen, Aluminium, Blei und Metallen der Gruppen IA, IIA, IB und IIB des Periodischen Systems der Elemente neutralisiert sind.

3. Bohrschlamm nach Anspruch 1 oder 2, dadurch gekennzeichnet, daß sich das neutralisierte sulfonierte thermoplastische Polymer von Polystyrol ableitet.

4. Bohrschlamm nach Anspruch 1 oder 2, dadurch gekennzeichnet, daß sich das neutralisierte sulfonierte thermoplastische Polymer von Poly-t-butylstyrol, Polychlorstyrol, Poly-alpha-methylstyrol, Polyvinyltoluol, Co- oder Terpolymeren von Styrol mit Acrylnitril, Methylmethacrylat, Butadien oder Mischungen derselben ableitet.

5. Bohrschlamm nach einem der vorangehenden Ansprüche, dadurch gekennzeichnet, daß das Benetzungsmittel ein Alkylarylsulfonat ist.

6. Bohrschlamm nach einem der vorangehenden Ansprüche, dadurch gekennzeichnet, daß das Beschwerungsmaterial Baryt oder Bariumsulfat ist.

9

7. Bohrschlamm nach einem der vorangehenden Ansprüche, dadurch gekennzeichnet, daß das Konzentrationsniveau des Beschwerungsmaterials ausreicht, dem Bohrschlamm ein spezifisches Gewicht von 1 bis 1,6 kg/l (10 bis 16 lb/gallon) zu verleihen.

8. Bohrschlamm nach einem der vorangehenden Ansprüche, dadurch gekennzeichnet, daß die organische Flüssigkeit ein Öl ist.

9. Bohrschlamm nach einem der vorangehenden Ansprüche, dadurch gekennzeichnet, daß er ein polares Co-Lösungsmittel enthält.

10. Bohrschlamm nach einem der vorangehenden Ansprüche, dadurch gekennzeichnet, daß das Wasser Salzwasser ist.

## Revendications

1. Boue de forage à base d'huile qui comprend
(a) un liquide organique;
(b) 1 à 10 parties en poids d'eau pour 100 parties en poids de liquide organique;
(c) 0,057 à 0,143 kg/l d'un émulsifiant;
(d) un agent mouillant;
(e) un agent alourdissant en quantité suffisante pour obtenir une densité de 16 à 20 lb/gallon (0,7 à 2 kg/l), et
(f) 0,25 à 4,0 lb/bbl (0,0007 à 0,011 kg/l) d'un polymère thermoplastique sulfoné neutralisé, ce polymère thermoplastique sulfoné neutralisé ayant 5 à 100 milliéquivalents de groupes sulfonate pour 100 g de polymère thermoplastique sulfoné neutralisé.

2. Boue de forage selon la revendication 1, dans laquelle les groupes sulfonate du polymère thermoplastique sulfoné neutralisé sont neutralisés par un ion antagoniste choisi parmi l'antimoine, le fer, l'aluminium, le plomb et les métaux des groupes IA, IIA, IB et IIB de la Classification Périodique des Eléments.

3. Boue de forage selon l'une des revendications 1 et 2, dans laquelle le polymère thermoplastique sulfoné neutralisé est un dérivé du polystyrène.

4. Boue de forage selon l'une des revendications 1 et 2, dans laquelle le polymère thermoplastique sulfoné neutralisé est un dérivé du poly-t-butylstyrène, du polychlorostyrène, du poly-alpha-méthyl-styrène, du polyvinyltoluène, de co- ou de terpolymères du styrène avec l'acrylonitrile, le méthacrylate de méthyle, le butadiène ou les mélanges de ceux-ci.

5. Boue de forage selon l'une des revendications précédentes, dans laquelle l'agent mouillant est un alkylarylsulfonate.

6. Boue de forage selon l'une des revendications précédentes, dans laquelle l'agent alourdissant est de la barytine ou du sulfate de baryum.

7. Boue de forage selon l'une des revendications précédentes dans laquelle le niveau de concentration de l'agent alourdissant est suffisant pour donner à la boue de forage un poids spécifique de 10 à 16 livres par gallon (1 à 1,6 kg/l).

8. Boue de forage selon l'une des revendications précédentes dans laquelle le liquide organique est un huile.

9. Boue de forage selon l'une des revendications précédentes qui contient un co-solvant polaire.

10. Boue de forage selon l'une quelconque des revendications précédentes, dans laquelle l'eau est de l'eau saline.